# EUROPÄISCHE PATENTSCHRIFT

(11) **EP 0 356 542 B1**
(45) Veröffentlichungstag und Bekanntmachung des Hinweises auf die Patenterteilung: **29.09.1993**
(21) Anmeldenummer: 88114112.1
(22) Anmeldetag: 30.08.1988
(51) Int. Cl.: G03B 17/30, G03C 3/00

(54) **Verfahren und Vorrichtung zur Herstellung von Filmkassetten**
Method and apparatus for the production of film cassettes
Procédé et dispositif de construction de cassettes de film

(43) Veröffentlichungstag der Anmeldung: 07.03.1990
(73) Patentinhaber: Agfa-Gevaert AG, 51373 Leverkusen (DE)
(72) Erfinder: Hoffacker, Franz, Dipl.-Ing-, D-4018 Langenfeld (DE); Lührig, Hermann, Dipl.-Ing., D-5090 Leverkusen (DE); Maier, Albert, Dipl.-Ing., D-8028 Taufkirchen (DE)

(56) Entgegenhaltungen:
- EP-A- 0 064 650
- DE-A- 3 112 359
- DE-B- 1 037 841

## Beschreibung

Die Erfindung betrifft ein Verfahren zur Herstellung von Filmkassetten, die einen annähernd zylindrischen Mantel, ein entlang einer Mantellinie verlaufendes Filmmaul und stirnseitige Kappen aufweisen, wobei eine den Mantel bildende Platine pro Kassette vor der Fertigformung von einem flachen Materialstreifen abgetrennt wird, der die Platinen für mehrere Kassetten umfaßt und dessen Breite der Länge des Umfanges eines fertig geformten Mantels entspricht, und wobei der Materialstreifen vor dem Abtrennen der Platinen mindestens längs einer das Filmmaul bildenden Kante fortlaufend mit einem Dichtungsmaterial versehen wird.

Aus der DE-A-31 18 210 ist es bereits bekannt, Filmkassetten nach einem Verfahren der vorgenannten Art herzustellen. Bei dem dort offenbarten Verfahren wird das Dichtungsmaterial, das längs der Kanten des Materialstreifens auf diesen aufgebracht wird, aus Einzelfasern aufgeflockt. Es ist dabei unmöglich, das Dichtungsmaterial über die Ränder der das Filmmaul bildenden Kassettenkanten etwas überstehen zu lassen, wie dies im Interesse der Lichtdichtigkeit häufig wünschenswert ist. Es ist daher notwendig, maulübergreifende Kappen zu verwenden, die jedoch gegenüber rotationssymmetrischen in der Herstellung teurer sind und bei der Montage besondere Vorkehrungen erfordern.

Es ist weiterhin aus DE-A-31 12 359 bekannt, Dichtungsstreifen, auch aus synthetischem Material, von einem Vorratsband in Stücken entsprechend der Länge des Kassettenmauls abzuschneiden und diese Stücke nach dem Abschneiden in das Kassettenmaul einzukleben. Dies erfordert jedoch einen relativ hohen Zeit- und Arbeitsaufwand. Trotzdem ist eine exakte Ausrichtung der Dichtungsstreifen-Stücke im Kassettenmaul beim Einkleben nicht gewährleistet.

Schließlich ist aus DE-B-10 37 841 bekannt, an einem Blechband, dessen Breite der Länge einer Platine entspricht, kontinuierlich die Längsränder so zu verformen, daß sie dem fertigen Kassettenmaul entsprechen, die verformten Längsränder mit dem Dichtungsmaterial zu bekleben und sodann die einzelnen Platinen vom Blechband abzutrennen, wobei gleichzeitig die Kappenkerben gestanzt werden. Das Verfahren hat den Vorteil, daß der Teil, der das Dichtungsmaterial trägt, nach dem Aufbringen des Dichtungsmaterials nicht mehr verformt wird. Nachteilig ist es jedoch, daß die Arbeitsschritte a) Bekleben mit dem Dichtungsmaterial, b) Einpressen der Sicken, c) Abtrennen der Einzelplatinen, d) Ausstanzen der Kappenkerben an einem nicht mehr ebenen Werkstück vorgenommen werden müssen, was ihre Durchführung äußerst kompliziert macht. Außerdem wird das Dichtungsmaterial im Bereich der Kappenkerben vollständig entfernt, was bei der fertigen Kassette zu Lichteinfall führen kann.

Der Erfindung liegt deshalb die Aufgabe zugrunde, ein Verfahren zu schaffen, das die Ausstattung des Kassettenmauls mit Dichtungsstreifen in exakter Abmessung und Anordnung ermöglicht und trotzdem einfach und kostengünstig in der Ausführung ist.

Diese Aufgabe wird erfindungsgemäß mit den Merkmalen des Anspruchs 1 der beigefügten Patentansprüche gelöst. Weitere Ausgestaltungen der Erfindung gehen aus den dem Anspruch 1 nachgeordneten Patentansprüchen hervor.

Die Erfindung erlaubt die Herstellung von Filmkassetten in weitgehend automatisierten Arbeitsgängen. Trotz Steigerung des Ausstoßes gewährleistet das erfindungsgemäße Verfahren eine gleichbleibend hohe Fertigungsqualität.

Dabei ist überraschend, daß die Dichtungsstreifen ihre volle Funktionsfähigkeit behalten, obwohl der Teil der Platine, auf den sie geklebt sind, anschließend noch Verformungen ausgesetzt ist.

Dabei ist die Fertigung der Kassetten nach dem erfindungsgemäßen Verfahren sehr kostengünstig.

Ein Ausführungsbeispiel der Erfindung ist in der nachfolgenden Beschreibung und in den beigefügten Zeichnungen näher beschrieben und dargestellt. In den Zeichnungen zeigen:
- Fig. 1: eine Vereinzelungsstation für die Materialstreifen,
- Fig. 2: eine Station zum Ausstanzen der Kappenkerben,
- Fig. 3: eine Station zum Zuführen und Ankleben der Dichtungsstreifen,
- Fig. 4: Schneidestation zum Durchtrennen der Dichtungsstreifen und Abtrennen der einzelnen Kassettenplatinen vom Materialstreifen,
- Fig. 5: einen aus der Kassettenplatine fertig geformten Kassettenmantel,
- Fig. 6: den Kassettenmantel mit einer Filmspule vor dem Einbringen in die Kassette,
- Fig. 7: die Kassette mit eingesetzter Filmspule und mit zwei Kappen vor dem Ansetzen,
- Fig. 8: die fertig montierte Kassette.

Bei dem nachfolgend beschriebenen Ausführungsbeispiel dienen als Ausgangsmaterial für die Herstellung der Kassettenmäntel größere Blechtafeln. Diese enthalten zahlreiche Felder, die in mehreren Reihen und Spalten angeordnet sind und jedes für sich der Größe eines Kassettenmantels in seiner Abrollung vor der Rundbiegung entspricht. Jedes Feld ist entsprechend der bei der fertigen Kassette gewünschten Erscheinungsform lackiert und bedruckt, u.a. mit den film- und firmenspezifischen Daten und sonstigen Angaben. Gegebenenfalls enthalten die Felder auch die Kodierungen nach dem bekannten DX-System.

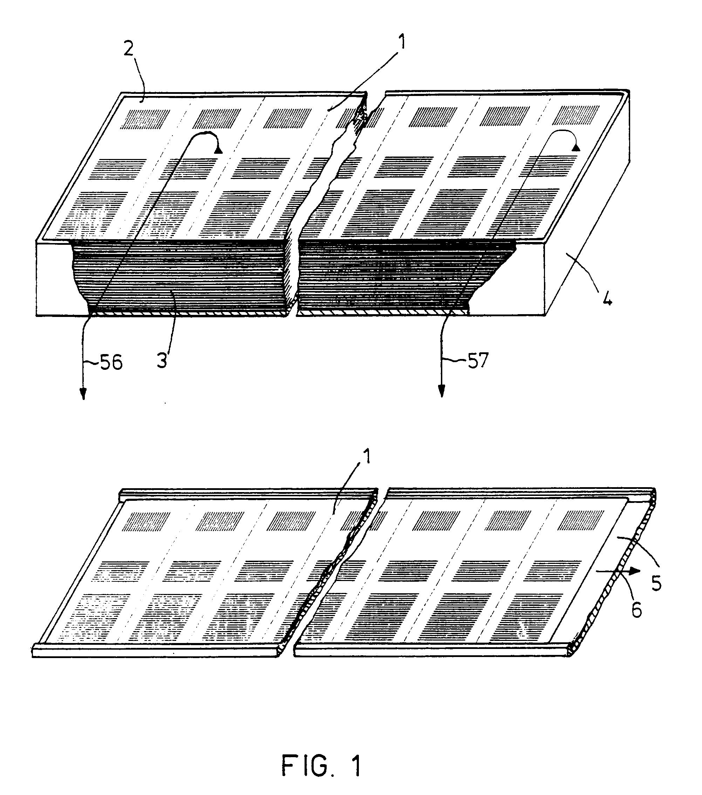

Die Blechtafeln werden entsprechend den Reihen der Felder in einzelne Materialstreifen geschnitten, die in Fig. 1 jeweils mit 1 bezeichnet sind.

Jeder dieser Materialstreifen 1 enthält eine Anzahl von unter sich gleichen Feldern 2, die nebeneinander angeordnet sind und jeweils dem Materialbedarf für einen Kassettenmantel entsprechen. Die von den Blechtafeln abgeschnittenen Materialstreifen 1 werden als Stapel 3 in einem Magazin 4 gesammelt und darin für die weitere Bearbeitung bereitgehalten.

Zur weiteren Bearbeitung werden die Materialstreifen 1 dem Stapel 3 nacheinander entnommen und durchlaufen nacheinander die Bearbeitungsstationen, die in Fig. 1 bis 4 einzeln dargestellt und an einer durchlaufenden Transportstraße nacheinander angeordnet sind.

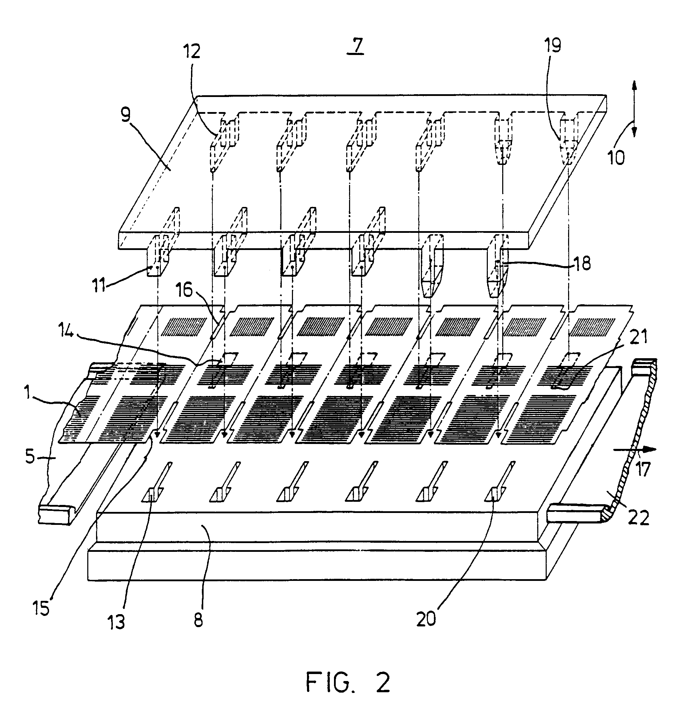

Nach Einsetzen des gefüllten Magazins 4 in die erste dieser Bearbeitungsstationen (Fig. 1) wird der jeweils oberste Materialstreifen 1 des im Magazin 4 enthaltenen Stapels 3 mittels an sich bekannter, nicht dargestellter Saugheber vom Stapel 3 abgehoben und nach seitlicher Versetzung in Richtung der Pfeile 56, 57 auf eine Führungsschiene 5 abgesenkt, auf welcher er mittels nicht dargestellter, an sich bekannter Transportmittel taktweise in Richtung des Pfeiles 6 transportiert und dabei in dei Stanzstation 7 überführt wird, die sich an die Führungsschiene 5 in Richtung des Pfeiles 6 anschließt und in Fig. 2 näher dargestellt ist.

Die Stanzstation 7 besteht aus einem starr angeordneten Matrizenblock 8 und einem plattenförmigen Stempelträger 9, der mittels eines nicht dargestellten Antriebs in Richtung des Doppelpfeiles 10 zur Ausführung eines Stanzhubes gegen den Matrizenblock 8 geführt und am Ende des Stanzhubes vom Matrizenblock 8 wieder abgehoben wird. Der Stempelträger 9 besitzt zwei bezüglich der Schnittkanten T- oder ambossförmige Stempel 11, 12, welche mit entsprechenden Matrizen 13, 14 im Matrizenblock 8 korrespondieren. Bei der Druchführung eines Stanzhubes des Stempelträgers 9 fahren die Stempel 11, 12 in die Ausnehmungen der entsprechenden Matrizen 13, 14 ein und erzeugen dabei im Materialstreifen 1 die zum späteren Ansetzen der stirnseitigen Kassettenkappen erforderlichen Kerben 15, 16 an beiden Rändern des Materialstreifens 1, wenn dieser in die Stanzstation 7 zwischen dem Matrizenblock 8 und dem Stempelträger 9 eingeführt ist. Dabei liegt der Materialstreifen 1 auf dem Matrizenblock 8 auf. Nur aus Gründen der besseren Übersichtlichkeit sind in Fig. 2 die Führung 5 und der Matrizenblock 8 einerseits und der hierauf aufliegende Materialstreifen 1 andererseits auseinandergezogen dargestellt.

Der Materialstreifen 1 wird in der Stanzstation vor Durchführung des jeweiligen Stanzhubes derart positioniert, daß die Kappenkerben 15, 16 genau zwischen zwei benachbarten Feldern 2, d.h. zwischen zwei benachbarten Platinenabschnitten für die Bildung von Kassettenmänteln entstehen. Nach dem späteren Auseinandertrennen der benachbarten Platinenabschnitte längs der Symmetrielinie der Kappenkerben tragen diese zu den Außenkonturen der Platinenabschnitte bei.

Der Materialstreifen 1 wird zwischen zwei aufeinanderfolgenden Stanzhüben des Stempelträgers 9 taktweise um ein Feld 2 in Richtung der Pfeile 6, 17 vorgeschoben, was durch eine nicht dargestellte Transportvorrichtung bewirkt wird.

Am Stempelträger 9 sind zusätzlich zu den als Stanzwerkzeugen dienenden Stempeln 11, 12 noch zwei unter sich gleichartige Paare von Justierstiften 18, 19 befestigt, welche in Richtung der Hubbewegung des Stempelträgers 9 länger sind als die Stempel 11,12 und sich nach unten keilförmig verjüngen. Im Hubweg der Justierstifte 18, 19 sind im Matrizenblock 8 zusätzliche Matrizenöffnungen 20, 21 vorhanden, welche den Matrizenöffnungen 13, 14 für die Stempel 11, 12 entsprechen. Die Justierstifte 18 bzw. 19 haben untereinander und zum benachbarten Stempel 11, 12 jeweils den Abstand der Breite eines Feldes 2. Bei Durchführung eines Stanzhubes der Stempelplatte 9 tauchen somit die Justierstifte 18, 19 mit ihren keilförmigen Schneiden durch Kappenkerben 15, 16 hindurch, welche im vorangegangenen Stanztakt entstanden sind und durch den zwischenzeitlichen Vorschub des Materialstreifens 1 in die Position der Justierstifte 18, 19 gerückt sind. Hierdurch wird erreicht, daß der Materialstreifen 1 für den neuen Stanztakt exakt positioniert wird und die im neuen Stanztakt entstehenden neuen Kappenkerben denselben Abstand zu den im vorangegangenen Takt entstandenen Kappenkerben aufweisen. Weicht der Vorschub des Materialstreifens 1 zwischen zwei Stanztakten von der vorgeschriebenen Länge geringfügig ab, bewirken die Justierstife 18, 19 mit ihren keilförmigen Schneiden beim Eintauchen in die im vorangegangenen Takt entstandenen Kappenkerben die passergenaue Positionierung des Materialstreifens 1, bevor bei Weiterführung des Stanzhubes der Stempelplatte 9 die Stempel 11, 12 die obere Fläche des Materialstreifens 1 erreicht haben. Ungenauigkeiten beim taktweisen Vorschub des Materialstreifens werden dadurch korrigiert.

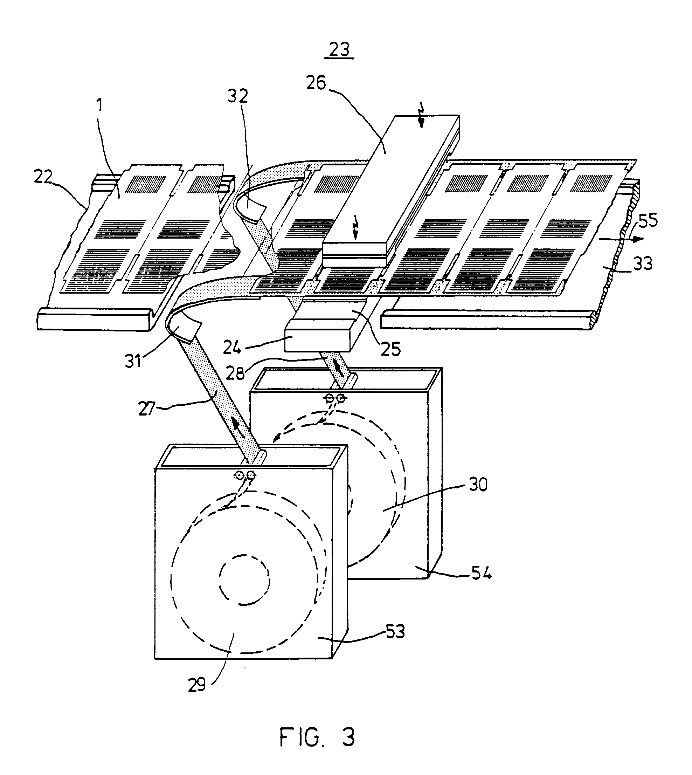

Von der Stanzstation 7 (Fig. 2) wird der Materialstreifen 1 über die Führungsschiene 22 an die Klebestation 23 (Fig. 3) übergeben. Die Klebestation 23 umfaßt einen Lagerblock 24 mit randseitigen nutenartigen Vertiefungen 25 und einen Andruckblock 26. Ferner umfaßt die Klebestation 23 zwei Vorratsmagazine 53, 54 für bandförmige Dichtungsstreifen 27, 28, welche von dort enthaltenen, als Vorratsspeicher dienenden Vorratsrollen 29, 30 als "Endlos"-Bänder abgezogen werden und über ortsfest angeordnete geschwungene Kufen 31, 32 der Bahn des Materialstreifens 1 an dessen Rändern annäherend tangential von unten her zugeführt werden.

Der Materialstreifen 1 wird in der Klebestation 23 im diskontinuierlichen Vorschub zwischen den Lagerblock 24 und den Andruckblock 26 gezogen, wobei der Materialstreifen 1 auf dem Lagerblock 24 aufliegt und mit dem Andruckblock 26, der mit einem Verkratzungen ausschließenden, weichen Belag versehen ist, gegen den Lagerblock 24 angedrückt wird. Dabei schmiegen sich die Dichtungsstreifen 27, 28 an die Unterseite des Materialstreifens 1 an dessen Rändern an und laufen dabei in den nutenartigen Vertiefungen 25 des Lagerblockes 24. Die Dichtungsstreifen 27, 28 werden der Unterseite des Materialstreifens 1 an dessen Rändern in der Weise zugeführt, daß sie über die Ränder des Materialstreifens 1 seitlich geringfügig vorstehen.

Die Dichtungsstreifen 27, 28, üblicherweise aus Samt, tragen an ihrer Unterseite eine übliche Heißsiegelkleberschicht. Zur Klebung ist der Andruckblock 26 mit einer nicht dargestellten, an sich bekannten elektrischen Heizvorrichtung ausgestattet, welche die Ränder des aus Blech bestehenden Materialstreifens 1 von oben her induktiv erwärmt. Durch Berührung mit dem erwärmten Rand des Materialstreifens 1 wird der Heißsiegelkleber aufgeschmolzen, wodurch sich die Dichtungsstreifen 27, 28 mit der Unterseite des Materialstreifens 1 verbinden und auch nach der Wiederabkühlung dauerhaft verbunden bleiben.

Da die Dichtungsstreifen 27, 28 zunächst endlos sind, überbrücken sie an der Unterseite des Materialstreifens 1 auch die randseitigen Kappenkerben 15, 16, wie in Fig. 3 deutlich erkennbar ist.

Aus Gründen der besseren Übersichtlichkeit sind auch in Fig. 3 die Führungsschienen 22, 33 sowie der Lagerblock 24 und der Andruckblock 26 in Bezug auf den Materialstreifen 1 auseinandergezogen dargestellt. Tatsächlich jedoch läuft der Materialstreifen 1 auf den Führungsschienen 22, 33 und dem Lagerblock 24.

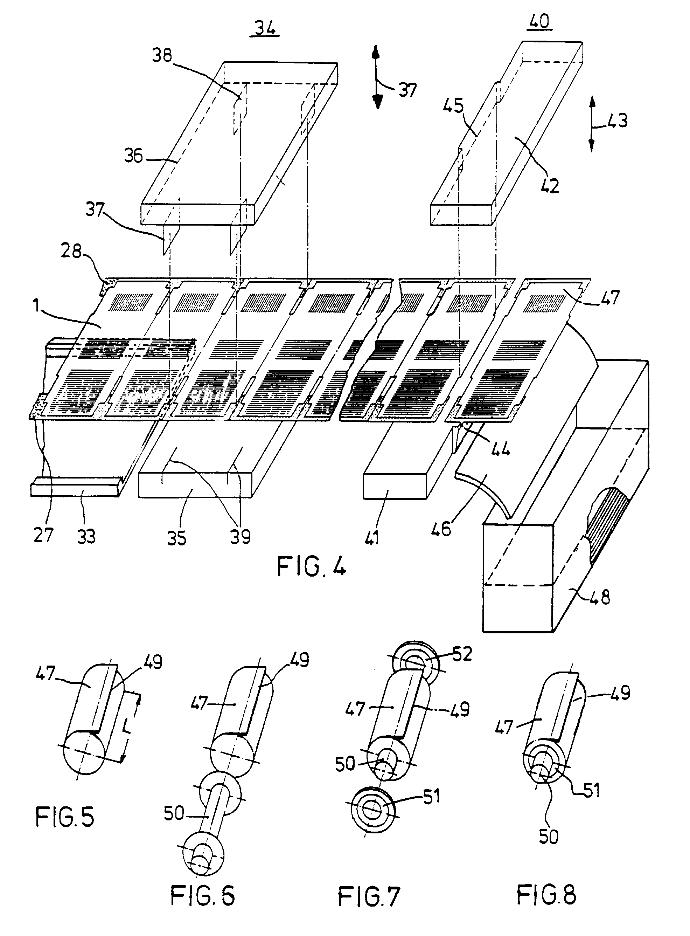

Nach dem Verlassen der Klebestation 23 gelangt der Materialstreifen 1 im weiteren Vorschub in Richtung des Pfeiles 55 über die Führungsschiene 33 zu den Trennstationen 34, 40, die in Fig. 4 wiederum auseinandergezogen dargestellt sind.

An die Führungsschiene 33 schließt sich im Transportweg des Materialstreifens 1 zunächst die Dichtungsstreifen-Trennstation 34 an. Sie umfaßt einen Matrizenblock 35, der den Materialstreifen 1 bei seinem Vorschub durch die Trennstation 34 von unten her abstützt, und einen Klingenblock 36, der mittels einer nicht dargestellten Antriebsvorrichtung in Richtung des Doppelpfeils 37 gegen den Matrizenblock 35 geführt und von ihm abgehoben werden kann. Der Klingenblock 36 weist an seiner Unterseite ein Klingenpaar 37, 38 auf, das beim Absenken des Klingenblockes 36 zum Matrizenblock 35 hin in schmale Schlitze 39 des Matrizenblockes 35 eintaucht (der hintere Schlitz 39 ist durch den Materialstreifen 1 verdeckt).

Bevor der Klingenblock 36 einen Arbeitschub ausführt, wird der Materialstreifen 1 durch die nicht dargestellte Vorschubeinrichtung über dem Matrizenblock 35 so positioniert, daß die Symmetrielinien der Kappenkerben 15, 16 über den Schlitzen 39 liegen. Beim anschließenden Arbeitshub des Klingenblockes 36 durchtrennen deshalb die Klingen 37, 38 die an der Unterseite des Materialstreifens 1 klebenden Dichtungsstreifen 27, 28 im Bereich der die Kappenkerben 15, 16 überbrückenden Abschnitte genau auf der Symmetrielinie dieser Kappenkerben, wobei die Klingen 37, 38 die Klappenkerben 15, 16 durchfahren.

An die Dichtungsstreifen-Trennstation 34 schließt sich in der Transportbahn des Materialsstreifens 1 bei dessen weiterem Vorschub die Abtrennstation 40 an. Sie besteht aus dem Matrizenblock 41, der den Materialstreifen 1 von unten her abstützt und dem Schnittwerkzeug 42, das in Richtung des Doppelpfeiles 43 zum Matrizenblock 41 hingeführt und von ihm abgehoben werden kann, was durch einen nicht dargestellten Antrieb erfolgt. Der Matrizenblock 41 und das Schnittwerkzeug 42 haben einander zugeordnete Scherkanten 44, 45.

Von dem Arbeitshub des Schnittwerkzeuges 42 wird der Materialstreifen 1 über dem Matrizenblock 41 so positioniert, daß die linksseitige Randlinie des rechten Endfeldes 47 des Materialstreifens 1 über der Scherkante 44 liegt. Beim Arbeitshub des Schnittwerkzeuges 42 wird deshalb das rechtsendige Feld 47 des Materialstreifens von diesem abgeschert. Der abgescherte Abschnitt 47 stellt die Platine dar, aus der anschließend ein Kassettenmantel geformt wird.

Die im Takt des Arbeitshubes des Schnittwerkzeuges 42 abgescherten, jeweils rechtsendigen Felder 47 des Materialstreifens fallen als Platinen für die zu formenden Kassettenmäntel über eine Rutsche 46 in eine Magazinbox 48, in welcher die nacheinander anfallenden Platinen 47 als Nutzen für die Weiterverarbeitung zwischengestapelt werden.

Jede Platine 47 weist annähernd Rechteckform auf, wobei die Länge der Platine dem Umfang des später fertig geformten Kassettenmantels entspricht, während die Breite der Platine der axialen Länge des später fertig geformten Kassettenmantels entspricht. In Abweichung von der strengen Rechteckform weisen die Ränder der Platinen 47 Konturen auf, die durch die jeweiligen Hälften der Kappenkerben 15, 16 gebildet worden sind. Die Breitseiten der Platinen besitzen unterseitig Dichtungsstreifen-Abschnitte, die über die Außenkontur der Platine an zwei Seiten überstehen.

Zur Fertigformung des Kassettenmantels und zur Bildung der Gesamtkassette werden die in der Magazinbox 48 zwischengespeicherten Platinen 47 weiteren Bearbeitungsstationen zugeführt, die nicht Bestandteil der vorliegenden Erfindung sind und deshalb nicht näher dargestellt sind.

Hierzu werden die in der Magazinbox 48 zwischengelagerten Platinen 47 nacheinander jeweils zu einem zylindrischen Kassettenmantel gebogen, wie er in Fig. 5 dargestellt ist. Dabei erhält die eine Endkante einen tangentialen Verlauf, während die andere Endkante um mehr als 90° abgewinkelt wird. Die beiden Endkanten der Platine 47, die mit je einem Abschnitt der Dichtungsstreifen 27, 28 versehen sind, stehen sich nach der zylindrischen Fertigformung des Kassettenmantels gegenüber und bilden das Filmmaul 49. Die Dichtungstreifen-Abschnitte der beiden Endkanten der Platine 47 legen sich dabei flächig aneinander und bewirken hierdurch die Lichtabdichtung des Mauls 49, durch das der in die fertige Kassette eingesetzte, nicht dargestellte Filmstreifen hindurchgeführt wird.

Anschließend wird jeder fertig geformte Kassettenmantel mit einer gesondert hergestellten Filmspule 50 bestückt (siehe Fig. 6), wonach stirnseitig rotationssymmetrische Endkappen 51, 52 angesetzt werden (siehe Fig. 7). Die fertige Kassette ist in Fig. 8 dargestellt.

Diese Endkappen 51,52 sind an ihren äußeren Rändern umgebördelt und bilden mit den stirnseitigen Rändern des Kassettenmantels 47 einen Klemmsitz sowie ein lichtdichtes Layrinth, wenn die Kappen 51, 52 an den Kassettenmantel stirnseitig angesetzt werden. Die rotationssymmetrische Ausbildung der Kappen 51, 52 ist deshalb möglich, weil die stirnseitigen Kanten des fertig geformten Kassettenmantels 47 im Bereich des Filmmauls 49 aufgrund der Kappenkerben 15, 16 etwas zurückspringen, wobei die Rücksprünge den umgebördelten Rand der Kappen 51, 52 im Bereich des Filmmauls 49 aufnehmen. Trotz dieser Rücksprünge bleibt die Lichtdichtheit der Kassette in diesem Bereich gewährleistet, da die Dichtungsstreifen 27, 28 über diese Rücksprünge vorstehen, wie aus Fig. 3 und 4 ersichtlicht ist.

Die Erfindung ist nicht auf das oben beschriebene Ausführungsbeispiel beschränkt. So kann anstelle der Zwischenstapelung in Magazinen 4, 48 auch ohne Zwischenstapelung gearbeitet werden. Ferner ist es auch möglich, anstelle von Materialstreifen 1 definierter Länge Endlosbänder als Rollenware einzusetzen. Die Dichtungsstreifen-Trennstation 34 und die Station 40 zum Abtrennen der Platinen 47 vom Materialstreifen 1 können auch derart miteinander vereinigt werden, daß die Werkzeuge zum Durchtrennen der Dichtungsstreifen 27,28 und zum Abtrennen der Platinen 47 längs einer gemeinsamen Schnittlinie angeordnet sind.

Schließlich ist es möglich, anstelle der beschriebenen eintaktigen Arbeitsweise mehrtaktig, z.B. zwei- oder viertaktig zu arbeiten, d.h. es werden gleichzeitig mehrere Kerbenpaare gestanzt, mehrere Felder 2 mit Dichtungsstreifen beklebt usw.

Das offenbarte Ausführungsbeispiel beschreibt die Herstellung einer Kassette für Kleinbildfilm. Die Erfindung ist jedoch nicht auf dieses Filmformat beschränkt.

Hierzu vier Blatt Zeichnungen.

## Patentansprüche

1. Verfahren zur Herstellung von Filmkassetten, die einen annähernd zylindrischen Mantel, ein entlang einer Mantellinie verlaufendes Filmmaul (49) und stirnseitige Kappen (51, 52) aufweisen, wobei eine den Mantel bildende Platine (47) pro Kassette vor der Fertigformung von einem flachen Materialstreifen (1) abgetrennt wird, der die Platinen (47) für mehrere Kassetten umfaßt und dessen Breite der Länge des Umfangs eines fertig geformten Mantels entspricht, und wobei der Materialstreifen (1) vor dem Abtrennen der Platinen (47) mindestens längs einer das Filmmaul (49) bildenden Kante fortlaufend mit einem Dichtungsmaterial versehen wird, dadurch gekennzeichnet, daß das Dichtungsmaterial dem Materialstreifen (1) in Form von fortlaufenden bandförmigen Dichtungsstreifen (27, 28) zugeführt wird, die im Durchlauf durch eine Klebestation (23) mit dem Materialstreifen (1) verbunden werden, und daß der Materialstreifen (1) vor dem Zuführen der Dichtungsstreifen (27, 28) an seinen Längskanten in Abständen, die der axialen Länge des fertig geformten Mantels entsprechen, mit Kappenkerben (15, 16) versehen wird, die nachfolgend durch die Dichtungsstreifen (27, 28) überbrückt werden, wobei diese nach deren Ankleben an den Materialstreifen (1) im Bereich der Kappenkerben (15, 16) durchtrennt werden.

2. Verfahren nach Anspruch 1, dadurch gekennzeichnet, daß der verwendete Materialstreifen (1) aus Blech gefertigt und entsprechend den Platinen (47) für die einzelnen Kassetten lackiert und/oder bedruckt ist.

3. Verfahren nach einem der vorangehenden Ansprüche, dadurch gekennzeichnet, daß das Ankleben der Dichtungsstreifen (27, 28) an den Materialstreifen (1) durch induktive Erwärmung des Bleches erfolgt.

4. Verfahren nach einem der vorangehenden Ansprüche, dadurch gekennzeichnet, daß das Durchtrennen der Dichtungsstreifen (27, 28) im Bereich der Kappenkerben (15, 16) vor dem Abtrennen der Platinen (47) erfolgt.

5. Verfahren nach einem der vorangehenden Ansprüche, dadurch gekennzeichnet, daß in dem Materialstreifen (1) die Kappenkerben (15, 16) zwischen den Platinen für eine oder mehrere Kassetten mittels eines Einfach- bzw. Mehrfachwerkzeuges taktweise gestanzt werden.

6. Verfahren nach einem der vorangehenden Ansprüche, dadurch gekennzeichnet, daß vor dem Ausstanzen der Kappenkerben (15, 16) aus dem Materialstreifen diese durch Justierstifte (18, 19) passgenau ausgerichtet werden.

7. Verfahren nach Anspruch 6, dadurch gekennzeichnet, daß das Ausrichten von in einem Stanztakt hergestellten Kappenkerben (15, 16) beim folgenden Stanztakt erfolgt.

8. Verfahren nach Anspruch 6, dadurch gekennzeichnet, daß die Werkzeuge zum Stanzen 11, 12) und Justieren (18, 19) der Kappenkerben (15, 16) am selben Träger (9) vorgesehen sind.

## Claims

1. Method of producing film cassettes which have an approximately cylindrical case, a film opening (49) extending along a surface line and end caps (51, 52), wherein one case-forming blank (47) per cassette is, prior to final shaping, detached from a flat material strip (1) which comprises the blanks (47) for a plurality of cassettes and whose width corresponds to the length of the periphery of a finished shaped case, and wherein the material strip (1) prior to separation of the blanks (47) is continuously provided with a sealing material at least along an edge which forms the film opening (49), characterized in that the sealing material is supplied to the material strip (1) in the form of continuous tape-like sealing strips (27, 28) which, in the course of passage through a bonding station (23), are bonded to the material strip (1), and that upstream of the supply of sealing strips (27, 28) the longitudinal edges of the material strip (1) are provided, at intervals corresponding to the axial length of the finished shaped case, with cap notches (15, 16) which are subsequently bridged by the sealing strips (27, 28), said sealing strips after being affixed to the material strip (1) being cut through in the region of the cap notches (15, 16).

2. Method according to claim 1, characterized in that the material strip (1) used is made of sheet metal and is painted and/or printed in accordance with the blanks (47) for the individual cassettes.

3. Method according to one of the preceding claims, characterized in that the sealing strips (27, 28) are affixed to the material strip (1) by inductive heating of the sheet metal.

4. Method according to one of the preceding claims, characterized in that cutting-through of the sealing strips (27, 28) in the region of the cap notches (15, 16) is effected prior to detachment of the blanks (47).

5. Method according to one of the preceding claims, characterized in that in the material strip (1) the cap notches (15, 16) between the blanks for one or more cassettes are punched in cycles with the aid of a simple or multiple press tool.

6. Method according to one of the preceding claims, characterized in that, prior to punching of the cap notches (15, 16) out of the material strip, said notches are precisely aligned by means of adjusting pins (18, 19).

7. Method according to claim 6, characterized in that the alignment of cap notches (15, 16) produced in one punching cycle is effected during the following punching cycle.

8. Method according to claim 6, characterized in that the tools for punching (11, 12) and adjusting (18, 19) the cap notches (15, 16) are provided on the same carrier (9).

## Revendications

1. Procédé de fabrication de cassettes de film qui ont une enveloppe approximativement cylindrique, une fente (49) de passage du film qui est orientée le long d'une génératrice, ainsi que des chapeaux d'extrémité (51, 52), un flan (47) formant l'enveloppe d'une cassette étant sectionné avant l'achèvement du formage dans une bande plane de matière (1) qui comprend les flans (47) de plusieurs cassettes et dont la largeur correspond à la longueur de la circonférence d'une enveloppe dont le formage est achevé et la bande de matière (1) étant munie en continu, avant la séparation des flans (47), d'une matière de garniture le long d'au moins une arête formant la fente (49) de passage du film, caractérisé en ce que la matière de garniture est dirigée sur la bande de matière (1) sous la forme de bandes continues de garniture en forme de rubans (27, 28) qui sont reliés à la bande de matière (1) à son passage par un poste de collage (23) et en ce que, avant que les bandes de garniture (27, 28) soient dirigées sur la bande de matière (1), celle-ci est munie sur les bords longitudinaux d'encoches de chapeau (15, 16) à des distances qui correspondent à la longueur axiale de l'enveloppe dont la mise en forme est achevée, ces encoches étant ensuite recouvertes par les bandes de garniture (27, 28), celles-ci étant sectionnées au niveau des encoches (15, 16) des chapeaux après leur collage à la bande de matière (1).

2. Procédé selon la revendication 1, caractérisé en ce que la bande de matière utilisée (1) est en tôle et elle est laquée et/ou munie d'inscriptions en correspondance avec les flans (47) des cassettes individuelles.

3. Procédé selon l'une des revendications précédentes, caractérisé en ce que le collage des bandes de garniture (27, 28) sur la bande de matière (1) est effectué par chauffage par induction de la tôle.

4. Procédé selon l'une des revendications précédentes, caractérisé en ce que le sectionnement des bandes de garniture (27, 28) est effectué au niveau des encoches (15, 16) des chapeaux avant la séparation des flans (47).

5. Procédé selon l'une des revendications précédentes, caractérisé en ce que les encoches (15, 16) des chapeaux sont estampées pas à pas dans la bande de matière (1) entre les flans pour une ou plusieurs cassettes au moyen d'un outil simple ou multiple.

6. Procédé selon l'une des revendications précédentes, caractérisé en ce qu'avant l'estampage des encoches (15, 16) des chapeaux dans la bande de matière, celle-ci est orientée aux cotes exactes par des broches d'ajustage (18, 19).

7. Procédé selon la revendication 6, caractérisé en ce que l'orientation d'encoches (15, 16) de chapeaux produites à une passe d'estampage est effectuée lors de la passe suivante d'estampage.

8. Procédé selon la revendication 6, caractérisé en ce que les outils d'estampage (11, 12) et d'ajustage (18, 19) des encoches (15, 16) des chapeaux sont prévus sur le même support (9).
